(19) Europäisches Patentamt
European Patent Office
Office européen des brevets

(11) Veröffentlichungsnummer : **0 035 712**
**B1**

(12) # EUROPÄISCHE PATENTSCHRIFT

(45) Veröffentlichungstag der Patentschrift : **16.02.83**

(21) Anmeldenummer : **81101420.8**

(22) Anmeldetag : **27.02.81**

(51) Int. Cl.³ : **C 07 C155/02**, C 07 C125/065, C 07 C149/437, C 07 C147/06, A 01 N 47/20

(54) **N-Aryl(thiol)carbamate, Verfahren zu ihrer Herstellung und ihre Verwendung zur Bekämpfung unerwünschten Pflanzenwuchses.**

(30) Priorität : **08.03.80 DE 3008985**

(43) Veröffentlichungstag der Anmeldung : **16.09.81 Patentblatt 81/37**

(45) Bekanntmachung des Hinweises auf die Patenterteilung : **16.02.83 Patentblatt 83/07**

(84) Benannte Vertragsstaaten : **AT BE CH DE FR GB IT LI NL SE**

(56) Entgegenhaltungen : **Keine**

(73) Patentinhaber : **BASF Aktiengesellschaft**
**Carl-Bosch-Strasse 38**
**D-6700 Ludwigshafen (DE)**

(72) Erfinder : **Schirmer, Ulrich, Dr.**
**Berghalde 79**
**D-6900 Heidelberg (DE)**
Erfinder : **Becker, Rainer, Dr.**
**Sonnenwendstrasse 83A**
**D-6702 Bad Duerkheim (DE)**
Erfinder : **Wuerzer, Bruno, Dr.**
**Ruedigerstrasse 13**
**D-6701 Otterstadt (DE)**
Erfinder : **Retzlaff, Guenter, Dr.**
**Schillerstrasse 34**
**D-6725 Roemerberg (DE)**

**EP 0 035 712 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

N-Aryl(thiol)carbamate, Verfahren zu ihrer Herstellung und ihre Verwendung zur Bekämpfung unerwünschten Pflanzenwuchses

Die vorliegende Erfindung betrifft N-Aryl(thiol)carbamate, ein Verfahren zu ihrer Herstellung, Herbizide, die diese Verbindungen als Wirkstoffe enthalten, sowie ein Verfahren zur Bekämpfung unerwünschten Pflanzenwuchses mit diesen Verbindungen.

Es ist bekannt, daß S-Methyl-N-[4-(4'-chlorphenoxy-)phenyl]-thiolcarbamat (US-PS 3 971 649), und S-Methyl-N-[4-(4'-chlorphenoxy)-3-chlorphenyl]-thiolcarbamat (US-PS 3 976 470) herbizid wirksam sind.

Es wurde gefunden, daß N-Aryl(thiol) carbamate der Formel I

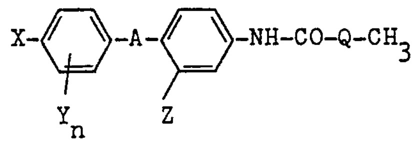

(I)

in der

X Wasserstoff, Fluor, Brom, Jod, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl oder Benzyloxy,

n 1 oder 2,

Z Wasserstoff, Halogen oder Trifluormethyl,

A Sauerstoff, Schwefel, Sulfinyl oder Sulfonyl und

Q Sauerstoff oder Schwefel bedeuten, gegen eine Reihe breitblättriger unerwünschter Pflanzen eine unerwartet gute herbizide Wirkung aufweisen. Sie sind bekannten N-Aryl(thiol)carbamaten in ihrer herbiziden Wirkung überlegen, während sie gleichzeitig für Kulturen aus der Familie der Gramineen sowie insbesondere für breitblättrige Kulturpflanzen ein hohes Maß an Verträglichkeit besitzen.

In der Formel I stehen X und Y für Wasserstoff, Phenyl oder Benzyloxy, Halogen, wie Fluor, Brom, Jod, wobei Y auch für Chlor stehen kann, sowie für unverzweigte oder verzweigte Alkyl-, Alkoxy-, Halogenalkyl-, oder Halogenalkoxy-, Alkylthio-, Alkylsulfinyl- oder Alkylsulfonylreste mit 1 bis 6 Kohlenstoffatomen, vorzugsweise mit 1 bis 4 Kohlenstoffatomen, oder Cycloalkylreste mit 3 bis 6 Kohlenstoffatomen, wie Methyl, Ethyl, Isopropyl, n-Propyl, Isobutyl, tert.-Butyl, n-Pentyl, n-Hexyl, Methoxy, Ethoxy, Isopropoxy, n-Propoxy, sec-Butoxy, Trifluormethyl, Difluormethoxy, Trifluormethoxy, 2-Chlor-2,1,1-trifluorethoxy, Methylthio, Methylsulfonyl, Isopropylthio, Cyclohexyl.

Z in Formel I steht für Wasserstoff, Halogen, wie Fluor, Chlor, Brom, oder Trifluormethyl.

Bevorzugte Verbindungen der Formel I sind solche, bei denen X Wasserstoff oder einen Alkyl-, Alkoxy- oder Halogenalkoxyrest mit 1 bis 4 Kohlenstoffatomen bedeutet.

Man erhält die N-Aryl(thiol)carbamate der Formel I durch Umsetzung von Aminen der Formel II

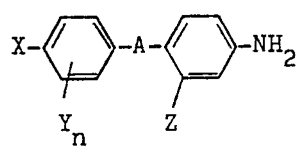

(II)

in der X, Y, Z, A und n die oben genannten Bedeutungen haben, mit dem Chlorameisensäure(thiol)methylester der Formel III

$$Cl—CO—Q—CH_3 \qquad (III)$$

in der Q die oben genannten Bedeutungen hat, in Gegenwart eines säurebindenden Mittels und eines Lösungsmittels.

Geeignete Lösungsmittel sind Wasser oder Alkohole, insbesondere aliphatische Alkohole, wie Methanol, Ethanol, Isopropanol, chlorierte aliphatische Kohlenwasserstoffe, wie Chloroform, Methylenchlorid, Dichlorethan, oder Ketone, wie Aceton, Diethylketon, Methylethylketon.

Als säurebindende Mittel kommen die üblichen Basen, wie Alkalihydroxid, -hydrogencarbonate, -carbonate, Erdalkalioxide, -hydroxide, -hydrogencarbonate, -carbonate sowie tertiäre organische Basen, in Betracht. Besonders geeignet sind Natriumhydroxid, Natriumcarbonat, Natriumhydrogencarbonat, Calciumoxid, Triethylamin, Pyridin, N,N-Dimethylanilin, N,N-Dimethyl-cyclohexylamin, Chinolin und Trin-butyl-amin.

Die Ausgangsstoffe der Formeln II und III werden in ungefähr stöchiometrischem Verhältnis eingesetzt, d. h. zweckmäßigerweise in einem Unter- bzw. Überschuß von bis zu 10 Mol.% Ausgangsstoff der Formel II gegenüber Ausgangsstoff der Formel III. Die Umsetzung wird bei einer Temperatur im Bereich zwischen − 20 und + 150 °C, vorzugsweise zwischen + 20 und + 60 °C, durchgeführt.

Die Amine der Formel II sind zum Teil bekannt ; sie können nach den in Houben-Weyl, Methoden der organ. Chemie, Bd. XI/1, S. 341 ff., Georg Thieme-Verlag, Stuttgart, 1957 beschriebenen Methoden hergestellt werden.

## Beispiel

25,0 Gewichtsteile 4-(4'-Methoxyphenoxy)-3-chlor-anilin werden in 200 Gewichtsteilen Aceton gelöst und mit 12,6 Gewichsteilen Natriumhydrogencarbonat, gelöst in 200 Gewichtsteilen Wasser, versetzt. Anschließend tropft man 9,45 Gewichtsteile Chlorameisensäuremethylester hinzu, rührt einige Stunden bei Raumtemperatur nach und gibt den Ansatz in Wasser, extrahiert mit Methylenchlorid und engt die organische Phase ein. Das verbleibende Öl kristallisiert mit Cyclohexan. Man erhält 28,2 Teile N-[4-(4'-Methoxy-phenoxy)-3-chlor-phenyl]-carbaminsäuremethylester vom Fp. 95 bis 98 °C.

Nach entsprechenden Verfahren können beispielsweise folgende Verbindungen hergestellt werden :

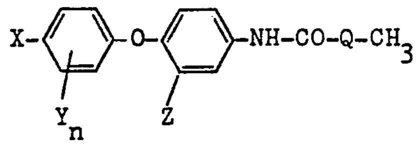

| Nr. | X | $Y_n$ | Z | Q | Fp.[°C] |
|---|---|---|---|---|---|
| 1 | $CH_3O$ | H | Cl | O | 95-98 |
| 2 | i-$C_3H_7O$ | H | Cl | O | 66-68 |
| 3 | $CH_3$ | H | Cl | O | 89-91 |
| 4 | $CH_3O$ | H | $CF_3$ | O | 108-111 |
| 5 | H | 3-$CH_3O$ | Cl | O | 60-63 |
| 6 | i-$C_3H_7O$ | H | Cl | S | 85-88 |
| 7 | n-$C_3H_7O$ | H | Cl | S | 68-70 |
| 8 | F | H | Cl | O | |
| 9 | Br | H | Cl | O | 108-110 |
| 10 | H | H | H | O | 90-92 |
| 11 | H | H | $CF_3$ | S | |
| 12 | $CF_3$ | H | H | O | |
| 13 | $CF_3$ | H | Br | S | |
| 14 | n-$C_3H_7$ | H | Cl | S | |
| 15 | i-$C_3H_7$ | H | Cl | S | 106-109 |
| 16 | H | 3-$CH_3O$ | Cl | S | 123-125 |
| 17 | $CH_3$ | 2-Cl | Cl | O | |
| 18 | F | H | Cl | S | |
| 19 | i-$C_3H_7$ | H | Br | O | |
| 20 | i-$C_3H_7O$ | H | $CF_3$ | O | |
| 21 | $CF_3$ | H | H | S | |
| 22 | $CH_3O$ | H | H | S | 122-124 |
| 23 | $CH_3O$ | H | H | O | 88-91 |
| 24 | H | 2-Cl | Cl | S | 104-106 |
| 25 | $FClCH-CF_2O$ | H | Cl | S | 81-83 |
| 26 | $CF_3O$ | H | Cl | S | 120-122 |
| 27 | $CH_3O$ | H | $CF_3$ | S | 81 |
| 28 | $CH_3O$ | H | Br | S | 119-121 |

| Nr. | X | $Y_n$ | Z | Q | Fp.[°C] |
|---|---|---|---|---|---|
| 29 | $C_2H_5O$ | H | Cl | O | 99-102 |
| 30 | $n\text{-}C_3H_7O$ | H | Cl | O | 48-52 |
| 31 | $CHF_2O$ | H | Cl | O | 68-70 |
| 32 | $n\text{-}C_3H_7$ | H | Cl | O | Öl |
| 33 | $i\text{-}C_3H_7$ | H | Cl | O | 69-71 |
| 34 | $CH_3O$ | H | F | O | 85-87 |
| 35 | $CH_3O$ | H | Br | O | 98-100 |
| 36 | $CF_3$ | H | Br | O | |
| 37 | H | 3-Cl | Cl | O | 46-49 |
| 38 | $CH_3$ | $2\text{-}CH_3$ | Cl | O | |
| 39 | $CH_3O$ | H | Cl | S | 104-106 |
| 40 | $C_2H_5O$ | H | Cl | S | 101-104 |
| 41 | $i\text{-}C_3H_7$ | H | H | O | |
| 42 | $i\text{-}C_3H_7O$ | H | H | O | |
| 43 | H | H | H | S | 91-93 |
| 44 | $i\text{-}C_3H_7O$ | H | F | S | |
| 45 | $i\text{-}C_3H_7$ | H | Br | S | |
| 46 | $CHF_2O$ | H | H | O | 77-78 |
| 47 | $FClCH\text{-}CF_2O$ | H | H | S | 109-111 |
| 48 | $i\text{-}C_3H_7O$ | H | H | S | |
| 49 | H | H | $CF_3$ | O | |
| 50 | $i\text{-}C_3H_7O$ | H | Br | S | |
| 51 | $FClCH\text{-}CF_2O$ | H | Cl | O | 62-65 |
| 52 | $CF_3O$ | H | Cl | O | |
| 53 | H | $3\text{-}CHF_2O$ | Cl | O | |
| 54 | $CF_3$ | H | Cl | O | 104-107 |
| 55 | $i\text{-}C_3H_7O$ | H | Br | O | |
| 56 | $i\text{-}C_3H_7$ | H | $CF_3$ | O | |
| 57 | H | 2-Cl | Cl | O | |
| 58 | $i\text{-}C_3H_7$ | 2-Cl | Cl | O | |
| 59 | $CHF_2O$ | [illegible] | Cl | S | 93-95 |
| 60 | H | $3\text{-}CHF_2O$ | Cl | S | |
| 61 | Br | H | Cl | S | 150-152 |
| 62 | $CH_3$ | H | Cl | S | 124-127 |
| 63 | $CH_3O$ | H | F | S | 91-93 |
| 64 | $FClCH\text{-}CF_2O$ | H | H | O | 77-79 |
| 65 | $i\text{-}C_3H_7$ | H | F | S | |
| 66 | $CF_3$ | H | F | S | |
| 67 | H | H | Cl | S | 116-118 |
| 68 | $CHF_2O$ | H | H | S | 82-84 |
| 69 | $i\text{-}C_3H_7$ | H | H | S | |
| 70 | H | H | Cl | O | 108-110 |
| 71 | H | 3-Cl | Cl | S | |
| 72 | $CH_3$ | 2-Cl | Cl | S | |
| 73 | $CF_3$ | H | Cl | S | 120-122 |
| 74 | $CH_3O$ | 2-Cl | Cl | S | |

| Nr. | X | $Y_n$ | Z | Q | Fp.[°C] |
|---|---|---|---|---|---|
| 75 | $CH_3O$ | 3-Cl | Cl | O | |
| 76 | $CH_3O$ | 2-Cl | Cl | O | |
| 77 | H | 2-Cl, 5-$OCH_3$ | Cl | S | |
| 78 | $CF_3$ | 2-Cl | Cl | O | |
| 79 | $CH_3O$ | 3-Cl | Cl | S | |
| 80 | $CF_3$ | 2-Cl | Cl | S | |
| 81 | H | 2-Cl, 5-$OCH_3$ | Cl | O | |
| 82 | tert-$C_4H_9$ | H | Cl | O | 96-98 |
| 83 | $CH_3S$ | H | Cl | O | 79-80 |
| 84 | tert-$C_4H_9$ | H | Cl | S | 90-92 |
| 85 | $C_6H_5CH_2O$ | H | Cl | O | 131-133 |
| 86 | $CH_3S$ | H | Cl | S | 137-139 |
| 87 | $C_6H_5$ | H | Cl | S | 120-122 |
| 88 | $C_6H_5CH_2O$ | H | Cl | S | 123-125 |
| 89 | $C_6H_{11}$ | H | Cl | S | 115-118 |
| 90 | $C_6H_{11}$ | H | Cl | O | 114-116 |
| 91 | $C_6H_5$ | H | Cl | O | 131-133 |
| 92 | i-$C_4H_9$ | H | Cl | S | Öl |
| 93 | i-$C_4H_9$ | H | Cl | O | Öl |
| 94 | $CH_3SO_2$ | H | Cl | S | |
| 95 | $CH_3SO_2$ | H | Cl | O | 154-156 |
| 96 | H | 3-$CH_3$ | Cl | O | 59-63 |
| 97 | H | 3-$CH_3$ | Cl | S | |
| 98 | $C_2H_5$ | H | Cl | O | 130-133 |
| 99 | $C_2H_5$ | H | Cl | S | 73-74 |
| 100 | $OCF_2CHFCF_3$ | H | Cl | O | 63-67 |
| 101 | H | 2-$OCH_3$ | Cl | O | 90-93 |
| 102 | $CH_3$ | 3-$CH_3$ | Cl | O | 79-81 |
| 103 | tert-$C_5H_{11}$ | H | Cl | O | 84-86 |
| 104 | i-$C_3H_7$ | 2-$CH_3$ | Cl | O | Öl |
| 105 | $CH_2$-$C_6H_5$ | H | Cl | O | 105-107 |
| 106 | i-$C_3H_7$ | 2-$CH_3$ | Cl | S | |
| 107 | $C_6H_5$ | H | Cl | S | 123-125 |
| 108 | $C_6H_5$ | H | Cl | O | 131-133 |

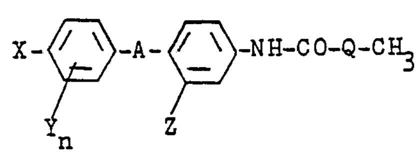

| | | | | | | |
|---|---|---|---|---|---|---|
| 109 | $CH_3O$ | H | Cl | O | S | 99-102 |
| 110 | $CH_3O$ | H | Cl | S | S | 120-122 |
| 111 | tert-$C_4H_9$ | H | Cl | O | S | 113-115 |
| 112 | $CH_3$ | H | Cl | S | S | 137-139 |
| 113 | $CHF_2O$ | H | Cl | S | S | 77-78 |
| 114 | tert-$C_4H_9$ | H | Cl | S | S | 134-137 |
| 115 | $CH_3O$ | H | Cl | S | $SO_2$ | |

| Nr. | X | $Y_n$ | Z | Q | A | Fp.[°C] |
|---|---|---|---|---|---|---|
| 116 | $CH_3O$ | H | Cl | O | $SO_2$ | 180-183 |
| 117 | $CHF_2O$ | H | Cl | O | S | 63-65 |
| 118 | $CH_3$ | H | Cl | O | S | 100-103 |
| 119 | tert-$C_4H_9$ | H | Cl | O | $SO_2$ | |
| 120 | tert-$C_4H_9$ | H | Cl | S | $SO_2$ | |
| 121 | $CHF_2O$ | H | Cl | S | $SO_2$ | |
| 122 | $CHF_2O$ | H | Cl | O | $SO_2$ | |
| 123 | H | H | Cl | S | S | 141-143 |
| 124 | H | H | Cl | O | S | |
| 125 | i-$C_3H_7O$ | H | Cl | O | S | 83-85 |
| 126 | i-$C_3H_7O$ | H | Cl | S | S | 72-73 |
| 127 | H | 2-Cl, 5-Cl | Cl | S | S | 117-119 |
| 128 | H | 2-Cl, 5-Cl | Cl | O | S | 105-108 |
| 129 | H | H | H | S | S | |

Die erfindungsgemäßen Wirkstoffe können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenoläther, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumriden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind :

I. Man vermischt 90 Gewichtsteile der Verbindung Nr. 1 mit 10 Gewichtsteilen N-Methyl-α-pyrrolidon und erhält eine Lösung, die zur Anwendung in Form kleinster Tropfen geeignet ist.

II. 20 Gewichtsteile der Verbindung Nr. 43 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

III. 20 Gewichtsteile der Verbindung Nr. 7 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteile des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile der Verbindung Nr. 31 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 20 Gewichtsteile der Verbindung Nr. 40 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gewichtsprozent des Wirkstoffs enthält.

VI. 3 Gewichtsteile der Verbindung Nr. 51 werden mit 97 Gewichtsteilen feinteiligem Kaolin vermischt. Man erhält auf diese Weise ein Stäubemittel, das 3 Gewichtsprozent des Wirkstoffs enthält.

VII. 30 Gewichtsteile der Verbindung Nr. 4 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Teile der Verbindung Nr. 6 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation der erfindungsgemäßen Wirkstoffe bzw. der Mittel kann im Vorauflaufverfahren oder bei Nachauflaufanwendung erfolgen. Vorzugsweise werden die Wirkstoffe nach dem Auflaufen der unerwünschten Pflanzen, sowohl auf Kulturflächen als auch auf unbebautem Land, ausgebracht. Dabei können die Mittel auf den Standort aufgebracht werden, bevor die unerwünschten Pflanzen aus den Samen gekeimt oder aus vegetativen Pflanzenteilen ausgetrieben haben, oder sie werden auf die Blätter der unerwünschten Pflanzen und der Kulturpflanzen appliziert. Sind die Wirkstoffe für die Kulturpflanze weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit und Wachstumsstadium 0,1 bis 15 kg/ha und mehr, wobei sich die höheren Dosen besonders zur totalen Bekämpfung von Vegetationen eignen. Vorzugsweise liegen die Aufwandmengen zwischen 0,5 und 5 kg/ha, insbesondere zwischen 0,5 und 2 kg/ha.

Der Einfluß verschiedener Vertreter der erfindungsgemäßen N-Aryl(thiol)carbamate auf das Wachstum von unerwünschten Pflanzen im Vergleich zu bekannten Wirkstoffen wird durch Gewächshausversuche gezeigt :

Als Kulturgefäße dienten Plastikblumentöpfe mit 300 $cm^3$ Inhalt und lehmigem Sand mit etwa 1,5 % Humus als Substrat. Die Samen der Testpflanzen entsprechend Tabelle 1 wurden nach Arten getrennt flach eingesät, oder es wurden vorgekeimte Jungpflanzen eingesetzt.

Generell wurden die Pflanzen zum Zwecke der Nachauflaufbehandlung bis zu einer Höhe von 3 bis 10 cm gezogen und danach behandelt. Die Wirkstoffe wurden auf die Sproßteile der Pflanzen und die nicht völlig von Pflanzen abgedeckte Bodenfläche, in Wasser als Verteilungsmittel suspendiert oder emulgiert, mittels fein verteilender Düsen gespritzt. Die Versuchstöpfe wurden dann in verschiedenen Temperaturbereichen der Gewächshausanlagen aufgestellt, wobei für wärmeliebende Arten 20 bis 30 °C und für solche gemäßigter Klimate 10 bis 20 °C bevorzugt wurden. Die Versuchsperiode erstreckte sich über 2 bis 4 Wochen. Während dieser Zeit wurden die Pflanzen gepflegt, und ihre Reaktion auf die einzelnen Wirkstoffe wurde ausgewertet. Die Auswertung der Versuche wurde nach einer Skala von 0 bis 100 vorgenommen. Dabei bedeutet 0 keine Schädigung und 100 völliges Absterben zumindest der oberirdischen Sproßteile.

Als Vergleichsmittel wurden die bekannten Wirkstoffe N-[4-(4′-Chlor-phenoxy)-phenyl]-thiolcarba-

minsäuremethylester ($V_1$ ; US-PS 3 971 649) und N-[4-(4'-Chlor-phenoxy)-3-chlorphenyl]-thiolcarbaminsäuremethylester ($V_2$ ; US-PS 3 976 470) getestet.

I. Bei Nachauflaufanwendung im Gewächshaus zeigen die Verbindungen Nr. 1, 6, 15, 43, 63, 67 und 70 bei Aufwandmengen von 1 bis 2 kg/ha in Getreide eine bessere herbizide Wirkung als das Vergleichsmittel $V_1$.

II. Bei Nachauflaufanwendung im Gewächshaus zeigen die Verbindungen Nr. 2, 7, 25, 47, 51 und 68 bei Aufwandmengen von 0,5 bis 1,0 kg/ha eine bessere herbizide Wirkung und eine bessere Verträglichkeit gegenüber den Kulturpflanzen als das Vergleichsmittel $V_2$.

III. Bei Nachauflaufanwendung im Gewächshaus zeigen die Verbindungen Nr. 1, 6, 15, 24, 31, 33, 34, 40, 62, 68 und 70 bei Aufwandmengen von 0,5 bis 1,0 kg/ha eine bessere Wirkung bei der Bekämpfung breitblättriger unerwunschter Pflanzen als das Vergleichsmittel $V_2$.

Aufgrund der guten Verträglichkeit können die erfindungsgemäßen Wirkstoffe in einer großen Zahl von Kulturpflanzen zur Bekämpfung unerwünschten Pflanzenwuchses eingesetzt werden. In Betracht kommen beispielsweise folgende Kulturen :

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |

| Botanischer Name | Deutscher Name |
|---|---|
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersiocon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- u. Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Urdbohne |
| Phaseolus vulgaris | Buschbohnen |
| Pennisetum glaucum | Perl- oder Rohrkolbenhirse |
| Petroselinim crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |
| Vaccinium carymbosum | Kulturheidelbeere |
| Vaccinium vitis-idaea | Preißelbeere |
| Vicia faba | Pferdebohnen |

| Botanischer Name | Deutscher Name |
| --- | --- |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die N-Aryl(thiol)carbamate der Formel I sowohl unter sich als auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate, Cyclohexan-1,3-dionderivate und andere in Betracht. Eine Reihe von Wirkstoffen, welche zusammen mit den neuen Verbindungen für verschiedenste Anwendungsbereiche sinnvolle Mischungen ergeben, werden beispielhaft aufgeführt :

5-Amino-4-chlor-2-phenyl-3(2*H*)-pyridazinon
5-Amino-4-brom-2-phenyl-3(2*H*)-pyridazinon
5-Amino-4-chlor-2-cyclohexyl-3(2*H*)-pyridazinon
5-Amino-4-brom-2-cyclohexyl-3(2*H*)-pyridazinon

5-Methylamino-4-chlor-2-(3-trifluormethylphenyl)-3(2*H*)-pyridazinon
5-Methylamino-4-chlor-2-(3-α,α,β,β-tetrafluorethoxyphenyl)-3(2*H*)-pyridazinon
5-Dimethylamino-4-chlor-2-phenyl-3(2*H*)-pyridazinon
4,5-Dimethoxy-2-phenyl-3(2*H*)-pyridazinon
4,5-Dimethoxy-2-cyclohexyl-3(2*H*)-pyridazinon
4,5-Dimethoxy-2-(3-trifluormethylphenyl)-3(2*H*)-pyridazinon
5-Methoxy-4-chlor-2-(3-trifluormethylphenyl)-3(2*H*)-pyridazinon
5-Amino-4-brom-2-(3-methylphenyl)-3(2H)-pyridazinon

4,5-Dimethoxy-2-(3-α,α,β-trifluor-β-bromethoxyphenyl)-3-(2*H*)-pyridazinon
3-(1-Methylethyl)-1H-2,1,3-benzothiadiazin-4(3*H*)-on-2,2-dioxid und Salze
3-(1-Methylethyl)-8-chlor-1H-2,1,3-benzothiadiazin-4(3*H*)-on-2,2-dioxid und Salze
3-(1-Methylethyl)-8-fluor-1H-2,1,3-benzothiadiazin-4(3*H*)-on-2,2-dioxid und Salze
3-(1-Methylethyl)-8-methyl-1H-2,1,3-benzothiadiazin-4(3*H*)-on-2,2-dioxid und Salze

1-Methoxymethyl-3-(1-methylethyl)-2,1,3-benzothiadiazin-4(3*H*)-on-2,2-dioxid
1-Methoxymethyl-8-chlor-3-(1-methylethyl)-2,1,3-benzothiadiazin-4(3*H*)-on-2,2-dioxid
1-Methoxymethyl-8-fluor-3-(1-methylethyl)-2,1,3-benzothiadiazin-4(3*H*)-on-2,2-dioxid
1-Cyan-8-chlor-3-(1-methylethyl)-2,1,3-benzothiadiazin-4(3*H*)-on-2,2-dioxid
1-Cyan-8-fluor-3-(1-methylethyl)-2,1,3-benzothiadiazin-4(3*H*)-on-2,2-dioxid
1-Cyan-8-methyl-3-(1-methylethyl)-2,1,3-benzothiadiazin-4(3*H*)-on-2,2-dioxid
1-Cyan-3-(1-methylethyl)-2,1,3-benzothiadiazin-4(3*H*)-on-2,2-dioxid
1-Azidomethyl-3-(1-methylethyl)-2,1,3-benzothiadiazin-4(3*H*)-on-2,2-dioxid
3-(1-Methylethyl)-1H-pyridino-[3,2-e] 2,1,3-thiadiazin-(4)-on-2,2-dioxid

N-(1-Ethylpropyl)-2,6-dinitro-3,4-dimethylanilin
N-(1-Methylethyl)-N-ethyl-2,6-dinitro-4-trifluormethylanilin
N-n-Propyl-N-β-chlorethyl-2,6-dinitro-4-trifluormethylanilin
N-n-Propyl-N-cyclopropylmethyl-2,6-dinitro-4-trifluormethyl-anilin
N-Bis-(n-propyl)-2,6-dinitro-3-amino-4-trifluormethylanilin
N-Bis-(n-propyl)-2,6-dinitro-4-methyl-anilin
N-Bis-(n-propyl)-2,6-dinitro-4-methylsulfonyl-anilin
N-Bis-(n-propyl)-2,6-dinitro-4-aminosulfonyl-anilin
Bis-(β-chlorethyl)-2,6-dinitro-4-methyl-anilin
N-Ethyl-N-(2-methylallyl)-2,6-dinitro-4-trifluormethylanilin

N-Methylcarbaminsäure-3,4-dichlorbenzylester
N-Methylcarbaminsäure-2,6-di-tert-butyl-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester
N-3-Chlorphenylcarbaminsäure-butin-1-yl-3-ester
N-3-Chlorphenylcarbaminsäure-4-chlor-butin-2-yl-1-ester

N-3,4-Dichlorphenylcarbaminsäure-methylester
N-(4-Amino-benzolsulfonyl)-carbaminsäure-methylester
O-(N-Phenylcarbamoyl)-propanonoxim
N-Ethyl-2-(phenylcarbamoyl)-oxypropionsäureamid
3'-N-Isopropyl-carbamoyloxy-propionanilid

Ethyl-N-(3-(N'-phenylcarbamoyloxy)-phenyl)-carbamat
Methyl-N-(3-(N'-methyl-N'-phenylcarbamoyloxy)-phenyl)-carbamat
Isopropyl-N-(3-(N'-ethyl-N'-phenylcarbamoyloxy)-phenyl)-carbamat
Methyl-N-(3-(N'-3-methylphenylcarbamoyloxy)-phenyl)-carbamat
Methyl-N-(3-(N'-4-fluorphenylcarbamoyloxy)-phenyl)-carbamat
Methyl-N-(3-(N'-3-chlor-4-fluorphenylcarbamoyloxy)-phenyl)-carbamat
Ethyl-N-(3-(N'-3-chlor-4-fluorphenylcarbamoyloxy)-phenyl)-carbamat
Ethyl-N-(3-(N'-3,4-difluorphenylcarbamoyloxy)-phenyl)-carbamat
Methyl-N-(3-(N'-3,4-difluorphenylcarbamoyloxy)-phenyl)-carbamat
N-3-(4-Fluorphenoxycarbonylamino)-phenyl-carbaminsäure-methylester
N-3-(2-Methylphenoxycarbonylamino)-phenyl-carbaminsäure-ethylester
N-3-(4-Fluorphenoxycarbonylamino)-phenyl-carbaminsäure-methylester
N-3-(2,4,5-Trimethylphenoxycarbonylamino)-phenyl-thiolcarbaminsäure-methylester
N-3-(Phenoxycarbonylamino)-phenyl-thiolcarbaminsäure-methyl-ester

N,N-Diethyl-thiolcarbaminsäure-p-chlorbenzylester
N,N-Di-n-propyl-thiolcarbaminsäure-ethylester
N,N-Di-n-propyl-thiolcarbaminsäure-n-propylester
N,N-Di-isopropyl-thiolcarbaminsäure-2,3-dichlorallylester
N,N-Di-isopropyl-thiolcarbaminsäure-2,3,3-trichlorallylester
N,N-Di-isopropyl-thilcarbaminsäure-3-methyl-5-isoxazolyl-methylester
N,N-Di-isopropyl-thiolcarbaminsäure-3-ethyl-5-isoxazolyl-methylester
N,N-Di-sec.-butyl-thilcarbaminsäure-ethylester
N,N-Di-sec.-butyl-thiolcarbaminsäure-benzylester
N-Ethyl-N-cyclohexyl-thiolcarbaminsäure-ethylester
N-Ethyl-N-bicyclo[2.2.1]heptyl-thiolcarbaminsäureethylester

S-(2,3-Dichlorallyl)-(2,2,4-trimethyl-azetidin)-1-carbothiolat
S-(2,3,3-Trichlorallyl)-(2,2,4-trimethyl-azetidin-1-carbothiolat
S-Ethyl-hexahydro-1-H-azepin-1-carbothiolat
S-Benzyl-(3-methyl-hexahydro-1-H-azepin-1)-carbothiolat
S-Benzyl-(2,3-dimethylhexahydro-1-H-azepin-1)-carbothiolat
S-Ethyl-(3-methylhexahydro-1-H-azepin-1)-carbothiolat
N-Ethyl-N-n-butyl-thiolcarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
$\alpha,\alpha$-Dichlorpropionsäure-Natriumsalz
$\alpha,\alpha$-Dichlorbuttersäure-Natriumsalz
$\alpha,\alpha,\beta,\beta$-Tetrafluorpropionsäure-Natriumsalz
$\alpha$-Methyl-$\alpha,\beta$-dichlorpropionsäure-Natriumsalz
$\alpha$-Chlor-$\beta$-(4-chlorphenyl)-propionsäure-methylester
$\alpha,\beta$-Dichlor-$\beta$-phenylpropionsäure-methylester
Benzamido-oxy-essigsäure
2,3,5-Trijodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Di-natrium-3,6-endoxohexahydro-phthalat
4-Amino-3,5,6-trichlor-picolinsäure (Salze)
2-Cyan-3-(N-methyl-N-phenyl)-amino-acrylsäureethylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz

2-[4-(3',5'-Dichlorpyridyl-2-oxy)-phenoxy]-propionsäure-Natriumsalz
2-(N-Benzoyl-3,4-dichlorphenylamino)-propionsäureethylester
2-(N-Benzoyl-3-chlor-4-fluorphenylamino)-propionsäuremethylester
2-(N-Benzoyl-3-chlor-4-fluorphenylamino)-propionsäureisopropylester
4-(4'-Trifluormethyl-phenoxy)-penten-2-carbonsäureethylester

2-Chlor-4-ethylamino-6-isopropylamino-1,3,5-triazin
2-Chlor-4-ethylamino-6-(amino-2'-propionitril)-1,3,5-triazin
2-Chlor-4-ethylamino-6-2-methoxypropyl-2-amino-1,3,5-triazin
2-Chlor-4-ethylamino-6-butin-1-yl-2-amino-1,3,5-triazin
2-Chlor-4,6-bisethylamino-1,3,5-triazin
2-Chlor-4,6-bisisopropylamino-1,3,5-triazin
2-Chlor-4-isopropylamino-6-cyclopropylamino-1,3,5-triazin

2-Azido-4-methylamino-6-isopropylamino-1,3,5-triazin
2-Methylthio-4-ethylamino-6-isopropylamino-1,3,5-triazin
2-Methylthio-4-ethylamino-6-tert-butylamino-1,3,5-triazin
2-Methylthio-4,6-bisethylamino-1,3,5-triazin
2-Methylthio-4,6-bisisopropylamino-1,3,5-triazin

2-Methoxy-4-ethylamino-6-isopropylamino-1,3,5-triazin
2-Methoxy-4,6-bisethylamino-1,3,5-triazin
2-Methoxy-4,6-bisisopropylamino-1,3,5-triazin
4-Amino-6-tert.-butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert.butyl-3-methylthio-4,5-dihydro-1,2,4-triazin-5-on
1-Methyl-3-cyclohexyl-6-dimethylamino-1,3,5-triazin-2,4-dion

3-tert.-Butyl-5-chlor-6-methyluracil
3-tert.-Butyl-5-brom-6-methyluracil
3-Isopropyl-5-brom-6-methyluracil
3-sec.-Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethylenuracil

2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1',2',4'-triazolyl-(1')]-ethan (Salze)
1-(4-Chlorphenoxy)-3,3-dimethyl-1-(1H-1,2,4-triazol-1-yl)-butan-2-on
N,N-Diallylchloracetamid
N-Isopropyl-2-chloracetanilid
N-(Butin-1-yl-3)-2-chloracetanilid

2-Methyl-6-ethyl-N-(propargyl)-2-chloracetanilid
2-Methyl-6-ethyl-N-(ethoxymethyl)-2-chloracetanilid
2-Methyl-6-ethyl-N-(2-methoxy-1-methylethyl)-2-chloracetanilid
2-Methyl-6-ethyl-N-(isopropoxycarbonylethyl)-2-chloracetanilid
2-Methyl-6-ethyl-N-(4-methoxypyrazol-1-yl-methyl)-2-chloracetanilid
2-Methyl-6-ethyl-N-(pyrazol-1-yl-methyl)-2-chloracetanilid
2,6-Dimethyl-N-(pyrazol-1-yl-methyl)-2-chloracetanilid
2,6-Dimethyl-N-(4-methylpyrazol-1-yl-methyl)-2-chloracetatanilid
2,6-Dimethyl-N-(1,2,4-triazol-1-yl-methyl-2-chloracetanilid
2,6-Dimethyl-N-(3,5-dimethylpyrazol-1-yl-methyl)-2-chloracetanilid
2,6-Dimethyl-N-(1,3-dioxolan-2-yl-methyl)-2-chloracetanilid
2,6-Dimethyl-N-(2-methoxyethyl)-2-chloracetanilid
2,6-Dimethyl-N-isobutoxymethyl-2-chloracetanilid
2,6-Diethyl-N-methoxymethyl-2-chloracetanilid
2,6-Diethyl-N-(n-butoxymethyl)-2-chloracetanilid
2,6-Diethyl-N-ethoxycarbonylmethyl-2-chloracetanilid
2,3,6-Trimethyl-N-(pyrazol-1-yl-methyl)-2-chloracetanilid
2,3-Dimethyl-N-isopropyl-2-chloracetanilid
2,6-Diethyl-N-(2-n-propoxyethyl)-2-chloracetanilid

2-(2-Methyl-4-chlorphenoxy)-N-methoxy-acetamid
2-(α-Naphthoxy)-N,N-diethylpropionamid
2,2-Diphenyl-N,N-dimethylacetamid
N-Benzyl-N-isopropyl-trimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
5-Acetamido-2,4-dimethyl-trifluormethansulfonanilid
5-Acetamido-4-methyl-trifluormethansulfonanilid
N-4-Methyl-5-(trifluormethyl)-sulfonylamino-phenylacetamid
2-Propionyl-amino-4-methyl-5-chlor-thiazol
O-(Methylsulfonyl)-glykolsäure-N-ethoxymethyl-2,6-dimethyl-anilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
2,6-Dichlorbenzonitril
3,5-Dibrom-4-hydroxy-benzonitril (Salze)
3,5-Dijod-4-hydroxy-benzonitril (Salze)
3,5-Dibrom-4-hydroxy-O-2,4-dinitrophenylbenzaldoxim (Salze)
3,5-Dibrom-4-hydroxy-O-2-cyan-4-nitrophenylbenzaldoxim (Salze)
Pentachlorphenol-Natriumsalz
2,5-Dichlorphenyl-4'-nitrophenylether
2,4,6-Trichlorphenyl-4'-nitrophenylether
2-Fluor-4,6-dichlorphenyl-4'-nitrophenylether
2-Chlor-4-trifluormethylphenyl-4'-nitrophenylether
2,4'-Dinitro-4-trifluormethyl-diphenylether
2,4-Dichlorphenyl-3'-methoxy-4'-nitro-phenylether
2-Chlor-4-trifluormethylphenyl-3'-ethoxy-4'-nitro-phenyl-ether
2-Chlor-4-trifluormethylphenyl-3'-carboxy-4'-nitro-phenyl-ether (Salze)
2-Chlor-4-trifluormethylphenyl-3'-ethoxycarbonyl-4'-nitrophenylether
2-Chlor-4-trifluormethylphenyl-3'-(2-fluorethoxy)-4'-nitro-phenylether
2-Chlor-4-trifluormethylphenyl-3'-ethoxycarbonyl-methyl-thio-4'-nitrophenylether
2-Chlor-4-trifluormethyl-3'-methoxycarbonyl-4'-nitrophenyl-ether
2,4,6-Trichlorphenyl-3-ethoxycarbonyl-methylthio-4'-nitrophenyl-ether
2,4-Dichlorphenyl-3'-methoxycarbonyl-4'-nitrophenyl-ether
2,4-Dichlorphenyl-3'-carboxy-4'-nitrophenylether
2-(3,4-Dichlorphenyl)-4-methyl-1,2,4-oxadiazolidin-3,5-dion
2-(3-tert.-Butylcarbamoyloxy-phenyl)-4-methyl-1,2,4-oxadiazolidin-3,5-dion
2-(3-i-Propylcarbamoyloxy-phenyl)-4-methyl-1,2,4-oxadiazolidin-3,5-dion
2-Phenyl-3,1-benzoxazinon-(4)
(4-Bromphenyl)-3,4,5,9,10-pentaazatetracyclo-[5,4,1,$0^{2,6,}0,\ ^{8,11}$]-dodeca-3,9-dien
2-Ethoxy-2,3-dihydro-3,3-dimethyl-5-benzofuranyl-methansulfonat
2-Ethoxy-2,3-dihydro-3,3-dimethyl-5-benzofuranyl-dimethylaminosulfat
2-Ethoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureimid
2-Methyl-4,6-dinitrophenol (Salze, Ester)
2-sec.-Butyl-4,6-dinitrophenol (Salze, Ester)
2-sec.-Butyl-4,6-dinitrophenol-acetat
2-tert.-Butyl-4,6-dinitrophenol-acetat
2-tert.-Butyl-4,6-dinitrophenol (Salze)
2-tert.-Butyl-5-methyl-4,6-dinitrophenol (Salze)
2-tert.-Butyl-5-methyl-4,6-dinitrophenol-acetat

2-sec.-Amyl-4,6-dinitrophenol (Salze, Ester)
1-(α,α-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-Chlorphenyl)-1-benzoyl-3,3-dimethyl-harnstoff
1-(4-Chlorphenyl)-3,3-dimethyl-harnstoff

1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstoff
1-(3-α,α,β,β-Tetrafluorethoxyphenyl)-3,3-dimethyl-harnstoff

1-(3-tert.-Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4-(4′-Chlorphenoxy)-phenyl]-3,3-dimethyl-harnstoff
1-[4-(4′-Methoxyphenoxy)-phenyl]-3,3-dimethyl-harnstoff
1-Cyclooctyl-3,3-dimethyl-harnstoff
1-(Hexahydro-4,7-methanindan-5-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.-Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethylharnstoff
1-(4-Benzyloxyphenyl)-3-methyl-3-methoxy-harnstoff
Imidazolidin-2-on-1-carbonsäure-isobutylamid
1,2-Dimethyl-3,5-diphenylpyrazolium-methylsulfat
1,2,4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenyl)-sulfonyloxy]-pyrazol
1-Acetyl-3-anilino-4-methoxycarbonyl-5-methyl-pyrazol
3-Anilino-4-methoxycarbonyl-5-methyl-pyrazol
3-tert.-Butylamino-4-methoxycarbonyl-5-methyl-pyrazol
2,3,5-Trichlor-pyridinol-(4)
1-Methyl-3-phenyl-5-(3′-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1′-Dimethyl-4,4′-dipyridylium-di-methylsulfat
1,1′-Di-(3,5-dimethylmorpholin-carbonylmethyl)-4,4′-dipyridylium-dichlorid
1,1′-Ethylen-2,2′-dipyridylium-dibromid

3-[1-(N-Ethoxyamino)-propyliden]-6-ethyl-3,4-dihydro-2H-pyran-2,4-dion
3-[1-(N-Allyloxyamino)-propyliden]-6-ethyl-3,4-dihydro-2H-pyran-2,4-dion
2-[1-(N-Allyloxyamino)-propyliden]-5,5-dimethylcyclohexan-1,3-dion (Salze)
2-[1-(N-Allyloxyamino-butyliden]-5,5-dimethylcyclohexan-1,3-dion (Salze)
2-[1-(N-Allyloxyamino-butyliden]-5,5-dimethyl-4-methoxycarbonyl-cyclohexan-1,3-dion (Salze)
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)

α-Naphthoxyessigsäuremethylester
2-[4-(5′-Brompyridyl-2-oxy)-phenoxy]-propionsäureethyl-ester
2-[4-(5′-Iodpyridyl-2-oxy)-phenoxy]-propionsäureethylester
2-[4-(5′-Iodpyridyl-2-oxy)-phenoxy]-propionsäure-n-butyl-ester
2-(2-Methylphenoxy)-propionsäure (Salze, Ester, Amide)
2-(4-Chlorphenoxy)-propionsäure (Salze, Ester, Amide)

2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
2-[4-(4'-Chlorphenoxymethyl)-phenoxy]-propionsäuremethyl-ester
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
2-[1-(N-ethoxamino)-butyliden]-5-(2-ethylthiopropyl)-3-hydroxy-cyclohexen-(2)-on-(1) (Salze)
2-[1-(N-ethoxamino)-butyliden]-5-(2-phenylthiopropyl)-3-hydroxy-cyclohexen-(2)-on-(1) (Salze)

Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chlorethanphosphonsäure-2-chlorethylester
Ammonium-ethyl-carbamoyl-phosphonat
Di-n-butyl-1-n-butylamino-cyclohexyl-phosphonat
Trithiobutylphosphit
O,O-Diisopropyl-5-(2-benzosulfonylamino-ethyl)-phosphordithionat
2,3-Dihydro-5,6-dimethyl-1,4-dithiin-1,1,4,4-tetraoxid
5-tert.-Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chlorethyl)-trimethyl-ammoniumchlorid
(2-Methyl-4-phenylsulfonyl)-trifluormethansulfonanilid
1,1-Dimethyl-4,6-diisopropyl-5-indanylethylketon
2-[1-(2,5-Dimethylphenyl)-ethylsulfonyl]-pyridin-N-oxid
Natriumchlorat
Ammoniumrhodanid
Calciumcyanamid

Außerdem ist es nützlich, die erfindungsgemäßen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden.

Zur Aktivierung der herbiziden Wirkung können auch Netz- und Hafmittel sowie nicht-phytotoxische Öle und Ölkonzentrate zugesetzt werden.

**Ansprüche**

1. N-Aryl(thiol)carbamate der Formel I

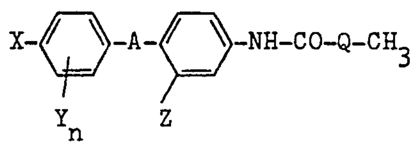

(I)

in der

X Wasserstoff, Fluor, Brom, Jod, einen Alkyl-, Alkoxy-, Halogenalkyl-, oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl oder Benzyloxy,

Y Wasserstoff, Halogen, einen Alkyl-, Alkoxy-, Halogenalkyl- Halogenalkoxy- Alkylthio-, Alkylsulfinyl- oder Alkylsulfonylrest mit 1 bis 6 Kohlenstoffatomen, einen Cycloalykrest mit 3 bis 6 Kohlenstoffatomen, Phenyl oder Benzyloxy,

n 1 oder 2,

Z Wasserstoff, Halogen oder Trifluormethyl,

A Sauerstoff, Schwefel, Sulfinyl oder Sulfonyl und

Q Sauerstoff oder Schwefel bedeuten.

2. N-Aryl(thiol)carbamate der Formel I gemäß Anspruch 1, dadurch gekennzeichnet, daß X in Formel I Wasserstoff oder einen Alkyl-, Alkoxy- oder Halogenalkoxyrest mit 1 bis 4 Kohlenstoffatomen bedeutet.

3. N-[4-(4'-Methoxy-phenoxy)-3-chlorphenyl]-carbaminsäuremethylester.

4. N-[4-(4'-Isopropyl-phenoxy)-3-chlor-phenyl]-thiolcarbaminsäuremethylester.

5. Herbizid, enthaltend ein N-Aryl(thiol)carbamat der Formel I gemäß Anspruch 1.

6. Herbizid, enthaltend einen flüssigen und/oder inerten Trägerstoff und ein N-Aryl(thiol)carbamat der Formel I gemäß Anspruch 1.

7. Verfahren zur Herstellung von N-Aryl(thiol)carbamaten der Formel I gemäß Anspruch 1, dadurch gekennzeichnet, daß man ein Amin der Formel II

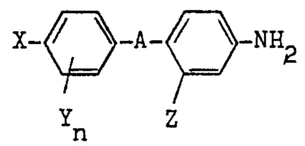

(II)

in der X, Y, Z, A und n die im Anspruch 1 genannten Bedeutungen haben, in Gegenwart eines säurebindenden Mittels und eines Lösungsmittels mit dem Chlorameisensäure-(thiol)methylester der Formel III

$$Cl—CO—Q—CH_3 \quad \text{(III)}$$

in der Q die im Anspruch 1 genannten Bedeutungen hat, umsetzt.

8. Verfahren zur Bekämpfung unerwünschten Pflanzenwuchses, dadurch gekennzeichnet, daß man die Pflanzen oder den Boden mit einer herbizid wirksamen Menge eines N-Aryl(thiol)carbamats der Formel I gemäß Anspruch 1 behandelt.

**Claims**

1. An N-aryl(thiol)carbamate of the formula I

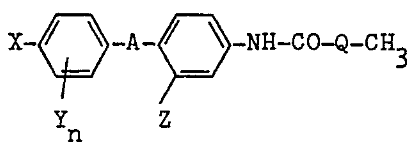

(I)

where

X denotes hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl or benzyloxy,

Y denotes hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl or benzyloxy,

n denotes 1 or 2,

Z denotes hydrogen, halogen or trifluoromethyl,

A denotes oxygen, sulfur, sulfinyl or sulfonyl, and

Q denotes oxygen or sulfur.

2. An N-aryl(thiol)carbamate of the formula I as claimed in claim 1, wherein X in formula I denotes hydrogen or alkyl, alkoxy or haloalkoxy of from 1 to 4 carbon atoms.

3. N-[4-(4'-methoxyphenoxy)-3-chlorophenyl]-carbamic acid methyl ester.

4. N-[4-(4'-isopropylphenoxy)-3-chlorophenyl]-thiolcarbamic acid methyl ester.

5. A herbicide containing an N-aryl(thiol)-carbamate of the formula I as claimed in claim 1.

6. A herbicide containing a liquid and/or inert carrier and an N-aryl(thiol)carbamate of the formula I as claimed in claim 1.

7. A process for the manufacture of N-aryl(thiol)carbamates of the formula I as claimed in claim 1, wherein an amine of the formula II

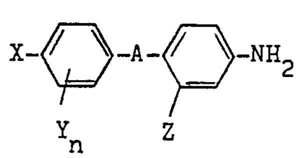

(II)

where X, Y, Z, A and n have the meanings given in claim 1, is reacted with the chloroformic acid(thiol)methyl ester of the formula III

$$Cl—CO—Q—CH_3 \quad (III)$$

where Q has the meanings given in claim 1, in the presence of an acid-binding agent and a solvent.

8. A process for combating unwanted plant growth, wherein the plants or the soil are treated with a herbicidally effective amount of an N-aryl(thiol)carbamate of the formula I as claimed in claim 1.

**Revendications**

1. N-Aryl(thiol)carbamates de la formule I

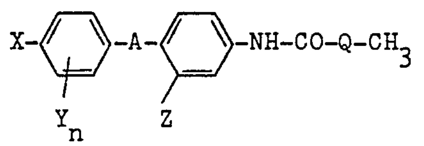

(I)

dans laquelle

X représente un atome d'hydrogène, de fluor, de brome ou d'iode, un radical alcoyle, alcoxy, halo-alcoyle ou halo-alcoxy, alcoyl-thio, alcoyl-sulfinyle ou alcoyl-sulfonyle en $C_1$ à $C_6$ ou un groupe cyclo-alcoyle en $C_3$ à $C_6$, phényle ou benzyloxy ;

Y désigne un atome d'hydrogène ou d'halogène, un radical alcoyle, alcoxy, halo-alcoyle ou halo-alcoxy, alcoylthio, alcoyl-sulfinyle ou alcoyl-sulfonyle en $C_1$ à $C_6$ ou un groupe cyclo-alcoyle en $C_3$ à $C_6$, phényle ou benzyloxy ;

n vaut 1 ou 2 ;

Z désigne un atome d'hydrogène ou d'halogène ou un groupe trifluoro-méthyle ;

A désigne un atome d'oxygène ou de soufre ou un groupe sulfinyle ou sulfonyle et

Q un atome d'oxygène ou de soufre.

2. N-Aryl(thiol)carbamates de la formule I selon la revendication 1, caractérisés en ce que, dans la formule I, le symbole X désigne un atome d'hydrogène ou un radical alcoyle, alcoxy ou halo-alcoxy en $C_1$ à $C_4$.

3. Le N-[4-(4'-méthoxy-phénoxy)-3-chlorophényl]-carbamate de méthyle.

4. Le N-[4-(4'-isopropyl-phénoxy)-3-chlorophényl]-thiol-carbamate de méthyle.

5. Herbicide, contenant un N-aryl-(thiol)-carbamate de la formule I selon la revendication 1.

6. Herbicide, contenant un N-aryl-(thiol)-carbamate de la formule I selon la revendication 1 dans une matière support liquide et(ou) inerte.

7. Procédé de préparation de N-aryl(thiol)carbamates de la formule I selon la revendication 1, caractérisé en ce que l'on fait réagir une amine de la formule II

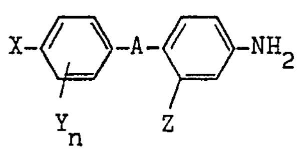

(II)

dans laquelle X, Y, Z, A et n possèdent les significations définies dans la revendication 1, en présence d'un solvant et d'un composé fixant l'acide, avec un chloro-formiate de (thiol)méthyle de la formule III

$$Cl—CO—Q—CH_3 \quad (III)$$

dans laquelle Q possède l'une des significations définies dans la revendication 1.

8. Procédé de lutte contre la croissance de plantes indésirables, caractérisé en ce que l'on traite les plantes ou le sol avec une quantité efficace du point de vue herbicide d'un N-aryl(thiol)carbamate de la formule I selon la revendication 1.